# EUROPEAN PATENT APPLICATION

(11) **EP 4 797 011 A1**
(43) Date of publication of application: **26.08.2026**
(21) Application number: 25159702.7
(22) Date of filing: 24.02.2025
(51) Int. Cl.: G05B 13/02

(54) **A CONTROL SYSTEM AND A METHOD FOR CONTROLLING INDOOR ENVIRONMENTAL CONDITIONS**

(71) Applicant: Helvar Oy Ab, 02150 Espoo (FI)
(72) Inventor: JUSLÉN, Henri, 02150 ESPOO (FI); KUKKONEN, Tommi, 02150 ESPOO (FI)
(74) Representative: Väänänen, Janne Kalervo

(57) **Abstract**

A control system for controlling environmental conditions such as lighting, heating, and ventilation prevailing in a building comprises one or more sensors (101, 102) a distance away from a movable space-dividing element and configured to produce one or more sensor signals indicative of a position of the movable space-dividing element (103). The control system further comprises a data processing system (104) communicatively connected to the one or more sensors and configured to control a building service system (106) related to the environmental conditions based on the position of the movable space-dividing element. Thus, the building service system can be adapted to operate in accordance with the position of the movable space-dividing element without a need to provide the movable space-dividing element with a position sensor.

## Description

### Field

The invention relates to a control system for controlling indoor environmental conditions prevailing in a building. The control system can be configured to control, for example, lighting, heating, ventilation, air conditioning, and/or other functionalities related to a building. Furthermore, the invention relates to a method and to a data processor program for controlling indoor environmental conditions prevailing in a building.

### Background

A building service system is a technology for controlling functionalities related to a building, e.g. functionalities related to indoor environmental comfort. The building service system may control e.g. lighting, heating, ventilation, air conditioning, positions of shades, positions of curtains, positions and/or lock modes of windows, positions and/or lock modes of doors, white noise generation, etc. A typical goal of the building service system is to provide lighting and thermal comfort, acceptable indoor air quality, and acceptable sound environment. The building service system is an important part of buildings such as single family homes, apartment buildings, hotels and senior living facilities, medium to large industrial and office buildings such as skyscrapers and hospitals where safe and healthy indoor environmental conditions are regulated with respect to temperature, carbon dioxide CO₂, volatile organic compounds "VOC", and humidity, using fresh air from outdoors.

In intelligent buildings, a building service system can be controlled in area-by-area basis, e.g. room-by-room basis. Especially in offices, many rooms are provided with one or more movable space-dividing elements with the aid of which a room can be divided into areas depending on needs prevailing at each time. A movable space-dividing element can be for example, a movable partition wall, a curtain, a door, a screen element, or another element for dividing a space. For example, a large meeting room can be provided with one or more movable partition walls with the aid of which the meeting room can be divided to form two or more smaller meeting room areas. In cases of the kind mentioned above, it can be advantageous to control the building service system depending on positions of the movable space-dividing elements. In the above-described meeting room example, there can be e.g. a situation in which the meeting room is divided to form two or more smaller meeting room areas and only one of these meeting room areas is in use i.e. occupied by users. In this exemplifying case, it is advantageous to have e.g. nominal lighting level only in the meeting room area which is in use. Therefore, there is a need to generate signals indicative of positions of the movable space-dividing elements and to submit these signals to the building service system. A straightforward approach is to provide movable space-dividing elements with position sensors configured to generate the signals indicative of positions of the movable space-dividing elements. This approach can be however inconvenient because a movable space-dividing element can be a loose object such as a screen element and thus energy supply to a position sensor attached to the movable space-dividing element should be arranged with a battery or an extension cord. Furthermore, it can be cumbersome to provide all possible movable space-dividing elements with position sensors when constructing a building service system.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments of the invention.

In accordance with the invention, there is provided a new control system for controlling environmental conditions prevailing in a building. The control system can be configured to control for example lighting, heating, ventilation, air-conditioning, shades, curtains, windows, doors, a data network, and/or a white noise generation. A control system according to the invention comprises:
- one or more sensors configured to produce one or more sensor signals indicative of a position of a movable space-dividing element, each of the one or more sensors being a distance away from the movable space-dividing element, and
- a data processing system communicatively connected to the one or more sensors and configured to control a building service system related to the environmental conditions based on the position of the movable space-dividing element.

The one or more sensors may comprise, for example, sound or infrared "IR" sensors positioned so that difference between sensor signals is dependent on whether the movable space-dividing element is between first and second areas of the building, e.g. between first and second areas of a room. It is also possible that the one or more sensors comprise a camera, a radar, and/or a lidar arranged so that the movable space-dividing element is in the field-of-view "FOV" of the camera, radar, or lidar when the movable space-dividing element is between first and second areas of the building, e.g. between first and second areas of a room. Thus, the building service system can be adapted to operate in accordance with the position of the movable space-dividing element without a need to provide the movable space-dividing element with a position sensor.

In accordance with the invention, there is also provided a new building management system that comprises:
- a building service system, and
- a control system according to the invention and configured to control the building service system.

In accordance with the invention, there is also provided a new method for controlling environmental conditions prevailing in a building. A method according to the invention comprises:
- producing, with one or more sensors, one or more sensor signals indicative of a position of a movable space-dividing element, each of the one or more sensors being a distance away from the movable space-dividing element, and
- controlling, with a data processing system communicatively connected to the one or more sensors, a building service system related to the environmental conditions based on the position of the movable space-dividing element.

Various embodiments of the invention can be put into practice as computer implemented invention "CII" embodiments. Therefore, in accordance with the invention, there is also provided a new data processor program for controlling environmental conditions prevailing in a building. A data processor program according to the invention comprises instructions for controlling a programmable data processor to:
- receive, from one or more sensors being a distance away from a movable space-dividing element, one or more sensor signals indicative of a position of the movable space-dividing element, and
- control a building service system related to the environmental conditions based on the position of the movable space-dividing element.

The above-mentioned data processor program can be called a computer program provided that a computer is understood in a broad sense so that e.g. a programmable router or another programmable device is deemed to be a computer.

In accordance with the invention, there is also provided a new data processor program product. The data processor program product comprises a non-volatile data processor readable medium encoded with a data processor program according to the invention.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features.

The features recited in dependent claims are mutually freely combinable unless otherwise explicitly stated. Furthermore, it is to be understood that the use of "a" or "an", i.e. a singular form, throughout this document does not exclude a plurality.

### Brief description of figures

Exemplifying and non-limiting embodiments and their advantages are explained in greater detail below with reference to the accompanying drawings, in which:
figure 1 illustrates a control system according to an exemplifying and non-limiting embodiment for controlling environmental conditions prevailing in a building,
figure 2 illustrates a control system according to an exemplifying and non-limiting embodiment for controlling environmental conditions prevailing in a building, and
figure 3 shows a flowchart of a method according to an exemplifying and non-limiting embodiment for controlling environmental conditions prevailing in a building.

### Description of exemplifying and non-limiting embodiments

The specific examples provided in the description below should not be construed as limiting the scope and/or the applicability of the invention. Lists and groups of examples provided in the description below are not exhaustive unless otherwise explicitly stated.

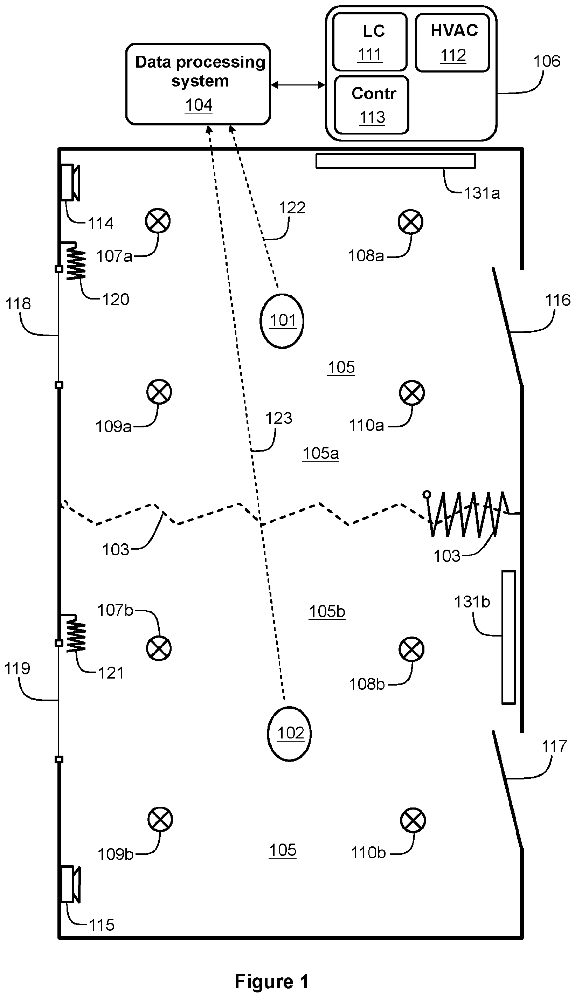

Figure 1 illustrates a control system according to an exemplifying and non-limiting embodiment for controlling environmental conditions, e.g. lighting, temperature, ventilation, etc., prevailing in a room 105 of a building. The room 105 can be for example a meeting room. In this exemplifying case, the room 105 is provided with a movable space-dividing element 103 with the aid of which the room 105 can be divided into first and second areas 105a and 105b. The movable space-dividing element 103 is a folding partition wall but, as well, a movable space-dividing element could be a curtain, a door, a screen element, or another element for dividing the room 105. In figure 1, the movable space-dividing element 103 is depicted with a solid line in a position in which the movable space-dividing element 103 does not divide the room 105 and with a dashed line in another position in which the movable space-dividing element 103 divides the room 105 into the above-mentioned areas 105a and 105b.

The control system comprises first and second sensors 101 and 102 that are configured to produce sensor signals indicative of a position of the movable space-dividing element 103. As shown in figure 1, each of the sensors 101 and 102 is a distance away from the movable space-dividing element 103, i.e. none of the sensors is attached to the movable space-dividing element 103. In other words, each of the sensors 101 and 102 is free from a mechanical contact with the movable space-dividing element so that positions of the sensors are independent of the position of the space-dividing element. The distance from each of the sensors to the movable space-dividing element can be, for example, in the range from 0.1 m to 50 m, or from 1 m to 20 m, or from 3 m to 10 m. The distance from each of the sensors to the movable space-dividing element can be a changing quantity depending on the position of the movable space-dividing element. The sensors 101 and 102 can be, for example, sound sensors or infrared sensors such as passive infrared sensors "PIR". The first sensor 101 is on the first area 105a, and the second sensor 102 is on the second area 105b. It is also possible that the first sensor 101 comprises two or more sensor elements, e.g. a sound sensor and an infrared sensor, in which case the sensor signal produced by the first sensor 101 has two or more signal components produced by the respective sensor elements. Correspondingly, the second sensor 102 may comprise two or more sensor elements, e.g. a sound sensor and an infrared sensor, in which case the sensor signal produced by the second sensor 102 has two or more signal components produced by the respective sensor elements.

In a situation in which the movable space-dividing element 103 does not divide the room 105, i.e. is in the position depicted with the solid line in figure 1, both the sensors 101 and 102 receive substantially same input excitation. e.g. sound or infrared "IR" radiation. Instead, in a situation in which the movable space-dividing element 103 divides the room 105, i.e. is in the position depicted with the dashed line in figure 1, there will be sooner or later a situation in which people, if any, on the first area 105a behave so differently than people, if any, on the second area 105a that the sensors 101 and 102 receive substantially different input excitation. e.g. sound or IR radiation. Therefore, the difference between sensor signals received from the first and second sensors 101 and 102 is dependent on whether the movable space-dividing element 103 is between the first and second areas 105a and 105b.

The control system comprises a data processing system 104 that is communicatively connected to the sensors 101 and 102. In figure 1, signal transfer links from the sensors 101 and 102 to the data processing system 104 are depicted with dashed lines 122 and 123. The signal transfer from the sensors 101 and 102 to the data processing system 104 can be wireless or corded signal transfer, and analog or digital signal transfer. The data processing system 104 is configured to control a building service system 106 based on the position of the movable space-dividing element 103. In this exemplifying case, the building service system 106 comprises a lighting system and a heating, ventilation and air conditioning "HVAC" system 112. The lighting system comprises a lighting controller "LC" 111 and luminaires 107a, 108a, 109a, 110a, 107b, 108b, 109b, and 110b configured to illuminate the room 105. The building service system 106 may further comprise a controller 113 for operating windows, doors, shades or curtains of the windows, and/or a data network. In figure 1, windows of the room 105 are depicted with references 118 and 119 and doors of the room 105 are depicted with references 116 and 117. Controllable shades or curtains of the windows are depicted with references 120 and 121. In some situations, the room 105 can be a place where distractions are a standard part of an acoustic landscape. To reduce the cognitive burden of working amidst constant distractions, the room 105 can be provided with white noise generators 114 and 115 to cover up at least partly the distractions. Thus, the controller 113 may also have means for operating the white noise generators 114 and 115.

In a control system according to an exemplifying and non-limiting embodiment, the data processing system 104 is configured to control the building service system 106 with one or more first control parameters on the first area 105a and with one or more second control parameters differing from the one or more first control parameters on the second area 105b in response to a situation in which the sensor signals express that the movable space-dividing element 103 is between the first and second areas 105a and 105b, i.e. when the movable space-dividing element 103 is in the position depicted with the dashed line in figure 1. Otherwise, i.e. when the movable space-dividing element 103 is in the position depicted with the solid line in figure 1, the data processing system 104 controls the building service system 106 with same control parameters on the first and second areas 105a and 105b because, in this situation, the room 105 forms a uniform space.

A difference of the above-mentioned one or more first control parameters of the building service system 106 with respect to the above-mentioned second control parameters may correspond to, for example, a difference in: a lighting level, a color temperature of lighting, a room temperature, a ventilation level, positions of shades, positions of curtains, positions and/or lock modes of windows, positions and/or lock modes of doors, and/or a white noise generation level. Furthermore, a difference of the above-mentioned one or more first control parameters with respect to the above-mentioned second control parameters may correspond to a difference in allocation of luminaires into lighting control groups. For example, in a situation in which the sensor signals express that the movable space-dividing element 103 is between the first and second areas 105a and 105b, the data processing system 104 can be configured to control a first lighting control group containing the luminaires 107a-110a and a second lighting control group containing the luminaires 107b-110b separately with respect to each other so that luminaires of each lighting control group are controlled in a same, group-specific way. In a situation in which the sensor signals express that the movable space-dividing element 103 is not between the first and second areas 105a and 105b, the data processing system 104 can be configured to control all the luminaires 107a-110a and 107b-110b in a same way as a single lighting control group. Thus, the position of the movable space-dividing element can be used for determining how the luminaires are allocated into lighting control groups.

A difference of the above-mentioned one or more first control parameters with respect to the above-mentioned second control parameters may correspond to a difference in a configuration of an audio-visual "AV" system. In the exemplifying case illustrated in figure 1, the AV system comprises a first AV set 131a and a second AV set 131b. Each of these AV sets comprises a display screen and one or more speaker elements. For example, in a situation in which the sensor signals express that the movable space-dividing element 103 is between the first and second areas 105a and 105b, the AV set 131a and the AV set 131b can be configured to operate independently of each other. In a situation in which the sensor signals express that the movable space-dividing element 103 is not between the first and second areas 105a and 105b, the AV set 131a and the AV set 131b can be configured to operate together so that they receive a same AV input signal.

In a control system according to an exemplifying and non-limiting embodiment, the data processing system 104 is configured to control the building service system 106 to produce a higher lighting level, a warmer color temperature of lighting, a higher ventilation level, a higher temperature control power, and/or a higher white noise generation level on the first area 105a than on the second area 105b in response to a situation in which the sensor signals express that: i) the movable space-dividing element 103 is between the first and second areas 105a and 105b, i.e. the movable space-dividing element 103 is in the position depicted with the dashed line in figure 1, and ii) the first area 105a is occupied and the second area 105b is free from occupation. The occupancy, i.e. presence of people and/or other living creatures, can be detected based on sounds received by sound sensors or IR radiation received by IR sensors, e.g. PIR sensors. The above-mentioned higher temperature control power means typically a higher heating power in a cold atmosphere and a higher air-conditioning power in a hot atmosphere to keep the room temperature on a convenient range. In a case of a greater occupancy, the higher ventilation level may be needed to keep e.g. amount of carbon dioxide CO₂, amount of volatile organic compounds "VOC", amount of inhalable particles, and/or humidity in a sufficiently low level in indoor air.

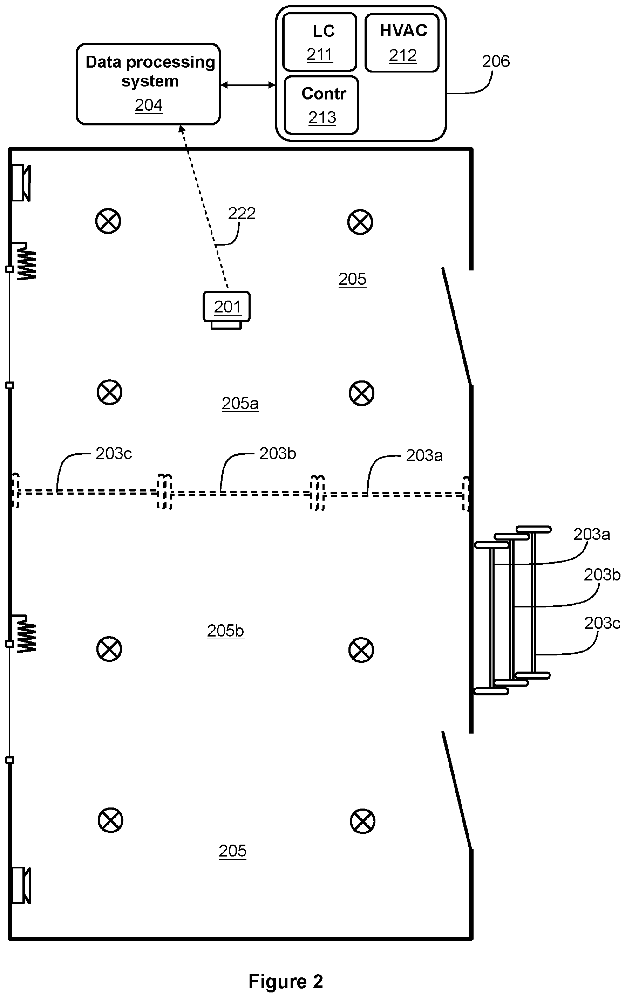

Figure 2 illustrates a control system according to an exemplifying and non-limiting embodiment for controlling environmental conditions, e.g. lighting, temperature, ventilation, etc., prevailing in a room 205 of a building. The room 205 can be for example a meeting room that can be divided into first and second areas 205a and 205b with the aid of movable space-dividing elements 203a, 203b, and 203c. In this exemplifying case, the movable space-dividing elements 203a-203c are screen elements which are loose elements such that they are not attached to walls and/or any other fixed structures of the building. Thus, the movable space-dividing elements 203a-203c can be only temporarily in the room 205 and they can be stored elsewhere, i.e. outside the room 205, when being not in use. Therefore, it would be cumbersome to provide the movable space-dividing elements 203a-203c with sensors for expressing whether the movable space-dividing elements 203a-203c are dividing the room into the areas 205a and 205b. In figure 2, the movable space-dividing element 203a-203c are depicted with solid lines in a position in which the movable space-dividing element 203a-203c do not divide the room 205, and with dashed lines in another position in which the movable space-dividing elements 203a-203c divide the room 205 into the above-mentioned areas 205a and 205b.

The control system comprises a sensor 201 that is configured to produce a sensor signal indicative of whether the movable space-dividing elements 203a-203c divide the room 205 into the above-mentioned areas 205a and 205b. The sensor 201 may comprise for example a camera, a radar, and/or a lidar so that the movable space-dividing elements 203a-203c are in the field-of-view "FOV" of the sensor 201 when the movable space-dividing elements 203a-203c divide the room 205 into the above-mentioned areas 205a and 205b.

The control system comprises a data processing system 204 that is communicatively connected to the sensor 201. In figure 2, a signal transfer link from the sensor 201 to the data processing system 204 is depicted with a dashed line 222. The signal transfer from the sensor 201 to the data processing system 204 can be wireless or corded signal transfer, and analog or digital signal transfer. The data processing system 204 is configured to control a building service system 206 based on the position of the movable space-dividing elements 203a-203c. In this exemplifying case, the building service system 206 comprises a lighting system and a heating, ventilation and air conditioning "HVAC" system 212. The lighting system comprises a lighting controller 211 and luminaires configured to illuminate the room 205. The building service system 206 may further comprise a controller 213 for operating windows, doors, shades or curtains of the windows, a data network, and/or a white noise generation system.

The data processing system 104 shown in figure 1 as well as the data processing system 204 shown in figure 2 can be implemented with one or more data processors each of which can be a programmable data processor provided with an appropriate software, a dedicated hardware data processor such as for example an application specific integrated circuit "ASIC", and/or a configurable hardware data processor such as for example a field programmable gate array "FPGA". Furthermore, the data processing system 104 as well as the data processing system 204 may comprise working memory that can be implemented with one or more random-access memory "RAM" circuits. A distributed data processing system can be implemented with data processors and memory devices placed in communicatively interconnected devices.

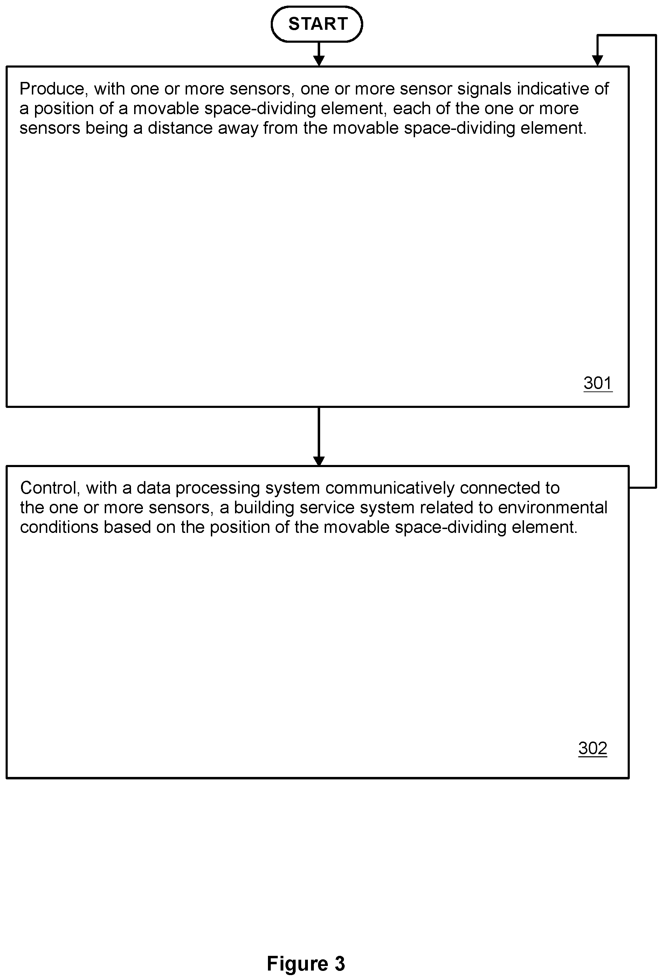

Figure 3 shows a flowchart of a method according to an exemplifying and non-limiting embodiment for controlling environmental conditions prevailing in a building. The method comprises the following actions:
- action 301: producing, with one or more sensors, one or more sensor signals indicative of a position of a movable space-dividing element, each of the one or more sensors being a distance away from the movable space-dividing element, and
- action 302: controlling, with a data processing system communicatively connected to the one or more sensors, a building service system related to the environmental conditions based on the position of the movable space-dividing element.

In a method according to an exemplifying and non-limiting embodiment, the one or more sensors comprise a first sensor on a first area of the building and a second sensor on a second area of the building, and the method comprises determining whether the movable space-dividing element is between the first and second areas of the building based on a difference between sensor signals received from the first and second sensors.

In a method according to an exemplifying and non-limiting embodiment, the first sensor is a first sound sensor, and the second sensor is a second sound sensor. In a method according to an exemplifying and non-limiting embodiment, the first sensor is a first infrared sensor, and the second sensor is a second infrared sensor. In a method according to an exemplifying and non-limiting embodiment, the first sensor comprises two or more first sensor elements, e.g. a first sound sensor and a first infrared sensor, and the second sensor comprises two or more second sensor elements, e.g. a second sound sensor and a second infrared sensor.

In a method according to an exemplifying and non-limiting embodiment, the one or more sensors comprise at least one of the following arranged so that the movable space-dividing element is in a field-of-view "FOV" of the one or more sensors when the movable space-dividing element is dividing a room: a camera, a radar, and a lidar.

A method according to an exemplifying and non-limiting embodiment comprises controlling at least one of the following parts of the building service system based on the position of the movable space-dividing element: a lighting system, a heating system, a ventilation system, an air-conditioning system, a shade system, a curtain system, a window system, a door system, a data network system, an audio-visual system, and a white noise generation system.

A method according to an exemplifying and non-limiting embodiment comprises controlling the building service system with one or more first control parameters on a first area of the building and with one or more second control parameters differing from the one or more first control parameters on a second area of the building in response to a situation in which the one or more sensor signals express that the movable space-dividing element is between the first and second areas of the building. Otherwise, the method comprises controlling the building service system with same one or more control parameters on the first and second areas of the building. A difference between the one or more first and second control parameters may correspond to a difference in: allocation of luminaires into lighting control groups, a lighting level, a color temperature of lighting, a room temperature, a ventilation level, positions of shades, positions of curtains, positions and/or lock modes of windows, positions and/or lock modes of doors, and/or a white noise generation level.

A method according to an exemplifying and non-limiting embodiment comprises controlling the building service system to produce a higher lighting level, a warmer color temperature of lighting, a higher ventilation level, a higher temperature control power, and/or a higher white noise generation level on a first area of the building than on a second area of the building in response to a situation in which the one or more sensor signals express that the movable space-dividing element is between the first and second areas of the building and that the first area of the building is occupied and the second area of the building is free from occupation.

A data processor program according to an exemplifying and non-limiting embodiment comprises data processor executable instructions for controlling a programmable data processor to carry out actions related to a method according to any of the above-described exemplifying embodiments.

A data processor program according to an exemplifying and non-limiting embodiment comprises software modules for controlling environmental conditions prevailing in a building. The software modules comprise data processor executable instructions for controlling a programmable data processor to:
- receive, from one or more sensors being a distance away from a movable space-dividing element, one or more sensor signals indicative of a position of the movable space-dividing element, and
- control a building service system related to the environmental conditions based on the position of the movable space-dividing element.

The above-mentioned software modules can be e.g. subroutines or functions implemented with a programming language suitable for the programmable data processor.

A data processor program product according to an exemplifying and non-limiting embodiment comprises a data processor readable medium encoded with a data processor program according to an embodiment of the invention.

A signal according to an exemplifying and non-limiting embodiment is encoded to carry information defining a data processor program according to an embodiment of the invention.

A non-transitory data processor readable medium according to an exemplifying and non-limiting embodiment is encoded with a data processor program according to an embodiment of the invention. The non-transitory data processor readable medium can be for example an electrically erasable read-only memory "EEPROM", a universal serial bus "USB" memory, a flash memory, e.g. a NOR flash or a NAND flash, or a compact disc read-only memory "CD ROM", or any other suitable non-volatile memory device.

The specific examples provided in the description given above should not be construed as limiting the scope and/or the applicability of the invention. Lists and groups of examples provided in the description given above are not exhaustive unless otherwise explicitly stated.

## Claims

1. A control system for controlling environmental conditions prevailing in a building, the control system comprising:
- one or more sensors (101, 102, 201) configured to produce one or more sensor signals indicative of a position of a movable space-dividing element (103, 203a-203c), each of the one or more sensors being a distance away from the movable space-dividing element, and
- a data processing system (104, 204) communicatively connected to the one or more sensors and configured to control a building service system (106, 206) related to the environmental conditions based on the position of the movable space-dividing element.

2. A control system according to claim 1, wherein the one or more sensors (101, 102) comprise a first sensor on a first area (105a) of the building and a second sensor on a second area (105b) of the building so that a difference between sensor signals received from the first and second sensors is dependent on whether the movable space-dividing element (103) is between the first and second areas of the building.

3. A control system according to claim 2, wherein the first sensor comprises a first sound sensor, and the second sensor comprises a second sound sensor.

4. A control system according to claim 2 or 3, wherein the first sensor comprises a first infrared sensor, and the second sensor comprises a second infrared sensor.

5. A control system according to any one of claims 1-4, wherein the one or more sensors (201) comprise at least one of following arranged so that the movable space-dividing element (203a-203c) is in a field-of-view of the one or more sensors when the movable space-dividing element is between first and second areas (205a, 205b) of the building: a camera, a radar, and a lidar.

6. A control system according to any of claims 1-5, wherein the data processing system is configured to control at least one of following parts of the building service system based on the position of the movable space-dividing element: a lighting system, a heating system, a ventilation system, an air-conditioning system, a shade system, a curtain system, a window system, a door system, a data network system, an audio-visual system, and a white noise generation system.

7. A control system according to any of claims 1-6, wherein the data processing system is configured to control the building service system with one or more first control parameters on a/the first area (105a, 205a) of the building and with one or more second control parameters differing from the one or more first control parameters on a/the second area (105b, 205b) of the building in response to a situation in which the one or more sensor signals express that the movable space-dividing element is between the first and second areas of the building, and otherwise to control the building service system with same one or more control parameters on the first and second areas of the building.

8. A control system according to claim 7, wherein a difference between the first and second control parameters corresponds to a difference in at least one of following: allocation of luminaires into lighting control groups, a lighting level, a color temperature of lighting, a room temperature, a ventilation level, positions of shades, positions of curtains, positions and/or lock modes of windows, positions and/or lock modes of doors, a configuration of an audio-visual system, and a white noise generation level.

9. A control system according to claim 7 or 8, wherein the data processing system is configured to control the building service system to produce a higher lighting level, a warmer color temperature of lighting, a higher ventilation level, a higher temperature control power, and/or a higher white noise generation level on the first area of the building than on the second area of the building in response to a situation in which i) the one or more sensor signals express that the movable space-dividing element is between the first and second areas of the building and ii) the first area of the building is occupied and the second area of the building is free from occupation.

10. A building management system comprising:
- a building service system (106, 206), and
- a control system according to any one of claims 1-9 and configured to control the building service system.

11. A method for controlling environmental conditions prevailing in a building, the method comprising:
- producing (301), with one or more sensors (101, 102, 201), one or more sensor signals indicative of a position of a movable space-dividing element (103, 203a-203c), each of the one or more sensors being a distance away from the movable space-dividing element, and
- controlling (302), with a data processing system (104, 204) communicatively connected to the one or more sensors, a building service system (106, 206) related to the environmental conditions based on the position of the movable space-dividing element.

12. A method according to claim 11, wherein the one or more sensors (101, 102) comprise a first sensor on a first area (105a) of the building and a second sensor on a second area (105b) of the building, and the method comprises determining whether the movable space-dividing element (103) is between the first and second areas of the building based on a difference between sensor signals received from the first and second sensors.

13. A method according to claim 11 or 12, wherein the method comprises controlling at least one of following parts of the building service system based on the position of the movable space-dividing element: a lighting system, a heating system, a ventilation system, an air-conditioning system, a shade system, a curtain system, a window system, a door system, a data network system, an audio-visual system, and a white noise generation system.

14. A data processor program for controlling environmental conditions prevailing in a building, the data processor program comprising computer executable instructions for controlling a programmable data processor to:
- receive, from one or more sensors being a distance away from a movable space-dividing element, one or more sensor signals indicative of a position of the movable space-dividing element, and
- control a building service system related to the environmental conditions based on the position of the movable space-dividing element.

15. A non-transitory processor readable medium encoded with a data processor program according to claim 14.

## Amended claims

### Amended claims in accordance with Rule 137(2) EPC.

1. A control system for controlling environmental conditions prevailing in a building, the control system comprising:
- one or more sensors (101, 102, 201) configured to produce one or more sensor signals indicative of a position of a movable space-dividing element (103, 203a-203c), each of the one or more sensors being a distance away from the movable space-dividing element, and
- a data processing system (104, 204) communicatively connected to the one or more sensors and configured to control a building service system (106, 206) related to the environmental conditions based on the position of the movable space-dividing element,
wherein the one or more sensors (101, 102) comprise a first sensor on a first area (105a) of the building and a second sensor on a second area (105b) of the building, and the data processing system is configured to determine whether the movable space-dividing element (103) is between the first and second areas of the building based on a difference between the sensor signals received from the first and second sensors.

2. A control system according to claim 1, wherein the first sensor comprises a first sound sensor, and the second sensor comprises a second sound sensor.

3. A control system according to claim 1 or 2, wherein the first sensor comprises a first infrared sensor, and the second sensor comprises a second infrared sensor.

4. A control system according to any one of claims 1-3, wherein the one or more sensors (201) comprise at least one of following arranged so that the movable space-dividing element (203a-203c) is in a field-of-view of the one or more sensors when the movable space-dividing element is between first and second areas (205a, 205b) of the building: a camera, a radar, and a lidar.

5. A control system according to any of claims 1-4, wherein the data processing system is configured to control at least one of following parts of the building service system based on the position of the movable space-dividing element: a lighting system, a heating system, a ventilation system, an air-conditioning system, a shade system, a curtain system, a window system, a door system, a data network system, an audio-visual system, and a white noise generation system.

6. A control system according to any of claims 1-5, wherein the data processing system is configured to control the building service system with one or more first control parameters on a/the first area (105a, 205a) of the building and with one or more second control parameters differing from the one or more first control parameters on a/the second area (105b, 205b) of the building in response to a situation in which the one or more sensor signals express that the movable space-dividing element is between the first and second areas of the building, and otherwise to control the building service system with same one or more control parameters on the first and second areas of the building.

7. A control system according to claim 6, wherein a difference between the first and second control parameters corresponds to a difference in at least one of following: allocation of luminaires into lighting control groups, a lighting level, a color temperature of lighting, a room temperature, a ventilation level, positions of shades, positions of curtains, positions and/or lock modes of windows, positions and/or lock modes of doors, a configuration of an audio-visual system, and a white noise generation level.

8. A control system according to claim 6 or 7, wherein the data processing system is configured to control the building service system to produce a higher lighting level, a warmer color temperature of lighting, a higher ventilation level, a higher temperature control power, and/or a higher white noise generation level on the first area of the building than on the second area of the building in response to a situation in which i) the one or more sensor signals express that the movable space-dividing element is between the first and second areas of the building and ii) the first area of the building is occupied and the second area of the building is free from occupation.

9. A building management system comprising:
- a building service system (106, 206), and
- a control system according to any one of claims 1-8 and configured to control the building service system.

10. A method for controlling environmental conditions prevailing in a building, the method comprising:
- producing (301), with one or more sensors (101, 102, 201), one or more sensor signals indicative of a position of a movable space-dividing element (103, 203a-203c), each of the one or more sensors being a distance away from the movable space-dividing element, and
- controlling (302), with a data processing system (104, 204) communicatively connected to the one or more sensors, a building service system (106, 206) related to the environmental conditions based on the position of the movable space-dividing element,
wherein the one or more sensors (101, 102) comprise a first sensor on a first area (105a) of the building and a second sensor on a second area (105b) of the building, and the method comprises determining whether the movable space-dividing element (103) is between the first and second areas of the building based on a difference between the sensor signals received from the first and second sensors.

11. A method according to claim 10, wherein the method comprises controlling at least one of following parts of the building service system based on the position of the movable space-dividing element: a lighting system, a heating system, a ventilation system, an air-conditioning system, a shade system, a curtain system, a window system, a door system, a data network system, an audio-visual system, and a white noise generation system.

12. A data processor program for controlling environmental conditions prevailing in a building, the data processor program comprising computer executable instructions for controlling a programmable data processor to:
- receive, from a first sensor being on a first area of the building and a distance away from a movable space-dividing element and from a second sensor being on a second area of the building and a distance away from a movable space-dividing element, sensor signals indicative of a position of the movable space-dividing element, and
- control a building service system related to the environmental conditions based on the position of the movable space-dividing element,
wherein the data processor program comprises computer executable instructions for controlling the programmable data processor to determine whether the movable space-dividing element is between the first and second areas of the building based on a difference between the sensor signals received from the first and second sensors.

13. A non-transitory processor readable medium encoded with a data processor program according to claim 12.
